# EUROPEAN PATENT SPECIFICATION

(11) **EP 2 865 966 B1**
(45) Date of publication and mention of the grant of the patent: **14.11.2018**
(21) Application number: 14751916.9
(22) Date of filing: 09.01.2014
(51) Int. Cl.: F24S 50/20, F24S 23/00, F24S 23/70, F24S 23/71, F24S 30/452, G02B 19/00

(54) **SOLAR TRACKING CONCENTRATOR**
SONNENVERFOLGUNGSKONZENTRATOR
CONCENTRATEUR À POURSUITE SOLAIRE

(30) Priority: 18.02.2013 KR 20130017184
(43) Date of publication of application: 29.04.2015
(73) Proprietor: Kim, Byunggyun, Busan 618-809 (KR)
(72) Inventor: Kim, Byunggyun, Busan 618-809 (KR)
(74) Representative: Peters, Sebastian Martinus
(86) International application number: PCT/KR2014/000256
(87) International publication number: WO 2014/126340

(56) References cited:
- EP-A2- 1 613 901
- JP-A- H08 222 017
- JP-A- H08 222 017
- JP-A- 2003 161 814
- JP-A- 2003 240 356
- US-A- 5 275 149
- US-A- 6 128 135

## Description

### TECHNICAL FIELD

The present invention relates to a solar tracking concentrator which is configured to allow a parabola to move according to the position change of the sun, and more particularly to a solar tracking concentrator capable of providing high-density light concentrated through the parabola to a certain location (or in a certain direction) at all times by using a total-reflection rectangular prism, thereby efficiently heating a heat storage device.

### BACKGROUND ART

A solar tracking concentrator is being provided for the purpose of providing high-density solar heat to a solar boiler, etc.

A solar location tracking apparatus for concentrating sunlight is disclosed in Korean Patent KR 100874575 B1. A solar tracking system using a solar sensor and a method using the same is disclosed in the publication of Korean Patent Application KR 1020110119446 A. A solar location tracking apparatus of a solar cell panel is disclosed in the publication of Korean Patent Application KR 1020100102402 A.

These conventional technologies track the altitude of the sun and east-west position of the sun from sunrise to sunset and improve the concentration effect. Accordingly, efficient solar heat concentration is obtained.

Meanwhile, a method of using high-density light concentrated by the solar heat tracking apparatus, etc., is provided in a technology for converting solar energy into electrical and/or thermal energy disclosed the publication of Korean Patent Application Number (A) 10-2009-0117733 (November 12, 2009). In this case, the first parabolic-shaped mirror including the first mirror which includes a concave mirror surface configured and disposed to receive and concentrate light energy toward the focal point; and the second mirror which includes a convex mirror surface configured and disposed to receive the concentrated light energy from the first mirror and to concentrate the light energy to an annular receiving device includes the concave mirror surface configured and disposed to receive and concentrate light energy toward the focal point.
Documents US 6128135 and JP H08 222017 describe a solar tracking concentrator according to the preamble of claim 1.

However, since the above mentioned technology is configured such that the heat is exchanged in a separately installed annular receiving device, the technology is difficult to be used as a strong heat source and has a low economical efficiency, and thus, has much difficulty in being used in industries.

### DISCLOSURE

### Technical Problem

The present inventor has researched and developed to overcome all the problems of the foregoing conventional solar tracking concentrator and parabola system. The present invention provides a solar tracking concentrator which provides the high-density light concentrated through parabola to a certain location (in a certain direction) at all times by using the total-reflection rectangular prism, thereby efficiently heating the heat storage device.

### Technical Solution

To overcome the problems, the present invention provides a solar tracking concentrator including: an east-west tracking means for tracking the movement of the sun in the east-west direction from the upper part of a base frame; a support disposed vertically on the east-west tracking means; a concentrator-type parabola system disposed so that a shaft thereof is supported by the support, and having a second parabola disposed at a position slightly past the focal point of a first parabola having a wide area so that the high-density light is concentrated in the center of the first parabola; and an altitude tracking means disposed on the support so as to have the concentrator-type parabola system tracking the solar altitude. The solar tracking concentrator further includes: a prism case which is disposed so as to cause a shaft thereof to be supported by the support such that the prism case is positioned in the rear of a light transport hole formed in the center of the first parabola of the concentrator-type parabola system, and so as to move angularly by means of the driving power of an altitude tracking motor of the altitude tracking means; and a light guidance means composed of a total-reflection rectangular prism coupled to the prism case. The light guidance means rotates half as much as the rotational angle of the altitude tracking means, thereby allowing the high-density light to be always guided and provided to the same location, wherein the rectangular portion of the total reflection rectangular prism is disposed toward the concentrator-type parabola system.

The solar tracking concentrator may comprise a high-density light transmitting safety pipe which guides the high-density provided from the total-reflection rectangular prism of the light guidance means built on the rotational support plate constituting the east-west tracking means, and wherein a guiding total-reflection rectangular prism which guides and provides the high-density light to a third area is further installed in the base frame under the high-density light transmitting safety pipe.

### Advantageous effects

Through use of the solar tracking concentrator provided by the present invention, sunlight can be continuously concentrated from sunrise to sunset, so that it is possible to significantly improve the concentration rate of the sunlight.

In the present invention, the light guide means is designed to rotate at an angle half as much as the rotation angle of the altitude tracking means. In such a configuration, under the state where the high-density light is guided to the same location at all times irrespective of the position movement of the parabola system, the high-density light can be guided and provided to a third area by using the total-reflection rectangular prism installed under the safety pipe for transmitting the high-density light. Therefore, the high-density light concentrated by the plurality of solar tracking concentrators is concentrated in one position, so that it is possible to provide a heating temperature higher than 1000°C. Accordingly, the present invention can be usefully applied to a solar heat boiler, etc.

### BRIEF DESCRIPTION OF DRAWINGS

Fig. 1 is a front view showing an exemplary example of a solar tracking concentrator provided by the present invention;
Fig. 2 is a side view of Fig. 1;
Fig. 3 is a plan view of Fig. 1;

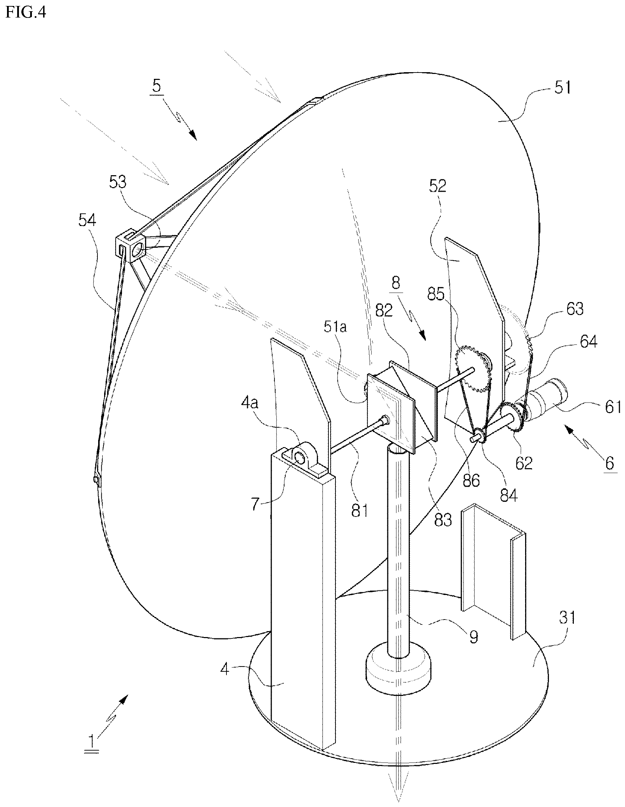

Fig. 4 is a perspective view showing a configuration of a light guide means applied to the present invention;
Fig. 5 is a view showing the moving state of high-density light a total-reflection rectangular prism in accordance with the rotations of an altitude tracking means and the light guide means; and
Fig. 6 shows a front cross-sectional view and a plan view which show an example of a solar heat boiler configured by arranging the solar tracking concentrators provided by the present invention.

### MODE FOR INVENTION

Hereafter, embodiments of the solar tracking concentrator provided by the present invention will be described with reference to the accompanying drawings.

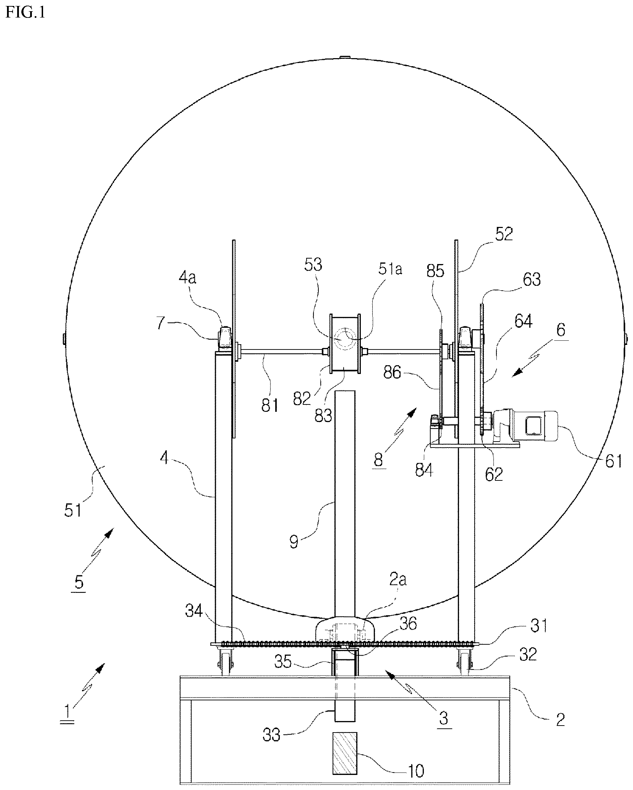

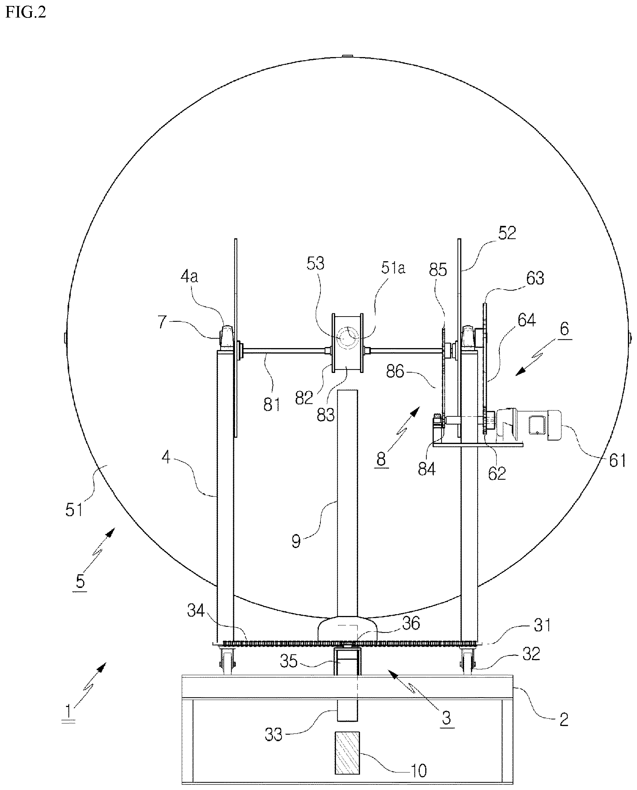

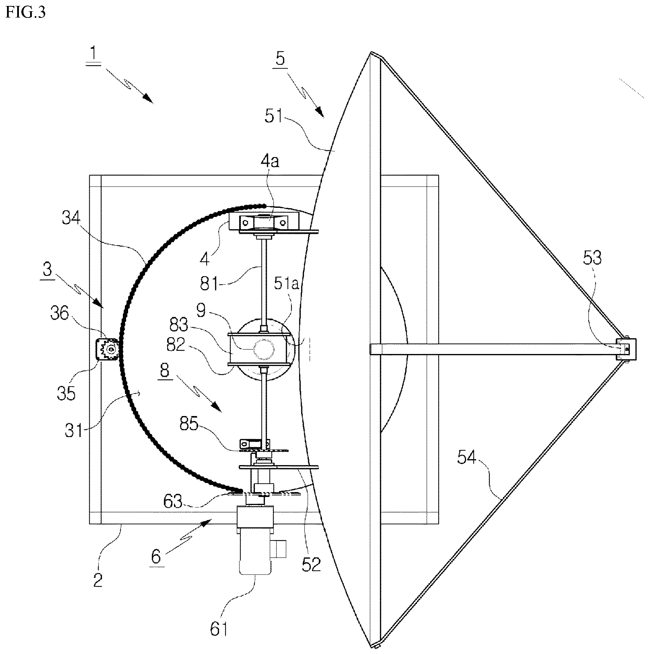

Fig. 1 is a front view showing an exemplary example of a solar tracking concentrator provided by the present invention. Fig. 2 is a side view of Fig. 1. Fig. 3 is a plan view of Fig. 1.

A solar tracking concentrator 1 provided by the present invention is configured such that a base frame 2 located on the ground is in a horizontal state.

An east-west tracking means 3 which tracks the east-west movement of the sun is installed on the base frame 2. A support 4 is built on the east-west tracking means 3. A shaft of a concentrator-type parabola system 5 is installed at the top of the support 4. The concentrator-type parabola system 5 is rotated along the altitude of the sun by means of an altitude tracking means 6 which is installed on the support 4 and tracks the altitude of the sun.

A wheel 32 which contacts with the top surface of the base frame 2 is coupled to the east-west tracking means 3. A rotational support plate 31 is installed on a rotational axis tube 33 of the central portion of the east-west tracking means 3 and is rotated by being coupled to the base frame 2 by a bearing 2a. A drive chain 34 is attached to the front edge of the rotational axis tube 33. A sprocket 36 coupled to an east-west tracking motor 35 which is installed on the base frame 2 and can be driven forward and backward is coupled to the drive chain 34, thereby allowing the rotational support plate 31 to be rotated by a certain angle.

Two right and left supports 4 are built symmetrically on the rotational support plate 31. A rotational shaft 7 which is supported by a bearing 4a is installed at the top of the support 4.

A bracket 52 which protrudes to the rear of a first parabola 51 of the concentrator-type parabola system 5 is fixed to the rotational shaft 7.

In the concentrator-type parabola system 5, a second parabola 53 is installed at a position slightly past the focal point of the first parabola in the front of the first parabola 51 which has a hemispherical (concave mirror) shape and a light transport hole 51a formed in the center thereof, and thus, high-density light is reflected to the central portion of the first parabola 51. The second parabola 53 is supported by several parabola supports 54 built at the edge of the first parabola 51.

Regarding the installation position of the second parabola 53, when the second parabola 53 is installed in front of the focal point of the first parabola 51, the straightness of the reflected light is reduced, and when the second parabola 53 is installed at the focal point of the first parabola 51, the second parabola 53 has a high degree of light integration and is not usable. Therefore, the second parabola 53 is installed at a position slightly past the focal point, and it is preferable that the second parabola 53 is installed at a position past 20 to 30mm the focal point when the focal point of the first parabola 51 is 2 to 3m.

In the concentrator-type parabola system 5 having such a configuration, sunlight from the sun is reflected from the first parabola 51. The reflected sunlight is concentrated to the second parabola 53 installed behind the focal point of the first parabola 51. Here, the second parabola 53 reflects again the concentrated high-density light to the light transport hole 51a formed in the center of the first parabola 51. This provides an effect of compressing the light provided from the first parabola 51 having a wide light concentration area.

Meanwhile, as described above, the concentrator-type parabola system 5 is rotated along the altitude of the sun by means of the altitude tracking means 6 installed on the support 4.

The altitude tracking means 6 is composed of an altitude tracking motor 61, a first drive sprocket 62 and a first passive sprocket 63. The altitude tracking motor 61 is able to provide a driving force in both directions of forward and backward. The first drive sprocket 62 and the first passive sprocket 63 are installed respectively in the rotational shaft 7 to which the concentrator-type parabola system 5 has been coupled. The first drive sprocket 62 and the first passive sprocket 63 are connected by a chain 64.

The travel distances and times of the east-west tracking motor 35 and the altitude tracking motor 61 may be changed depending on the season. The travel distances and times are not shown and are collectively drive-controlled by a separate control means.

In the foregoing, the configuration of the solar tracking concentrator 1 is a generally known art. The configuration of the east-west tracking means 3, the concentrator-type parabola system 5, and the altitude tracking means 6 can be replaced by a variety of known configurations.

The solar tracking concentrator 1 provided by the present invention further includes a particular technology of transmitting the high-density light concentrated through the above configuration to other regions and using the light.

That is, in the present invention, a light guidance means 8 is installed in the rear of the first parabola 51 in such a manner as to be aligned with the light transport hole 51a formed in the center of the first parabola 51 of the concentrator-type parabola system 5, so that the high-density light concentrated in the concentrator-type parabola system 5 is always provided in the same direction.

A prism rotational shaft 81 is installed such that the light guidance means 8 provided by the present invention is supported by both the supports 4. A prism case 82 is coupled to the prism rotational shaft 81.

A total-reflection rectangular prism 83 is installed in the prism case 82, so that the high-density light provided through the light transport hole 51a is reflected to other regions. Here, the rectangular portion of the total-reflection rectangular prism 83 is disposed toward the concentrator-type parabola system 5.

Also, a second passive sprocket 85 which is connected by a chain 86 to a second drive sprocket 84 installed on the altitude tracking motor 61 is installed on the prism rotational shaft 81. Accordingly, the second passive sprocket 85 is driven together with the concentrator-type parabola system 5 when tracking the altitude.

Here, a gear ratio is made such that when the first passive sprocket 63 connected by the chain 64 to the first drive sprocket 62 driving the concentrator-type parabola system 5 rotates once, the second passive sprocket 85 connected by the chain 86 to the second drive sprocket 84 installed on the altitude tracking motor 61 driving the light guidance means 8 half rotates.

Such a configuration provides functionality to guide the high-density light in the same direction at all times even when the concentrator-type parabola system 5 moves.

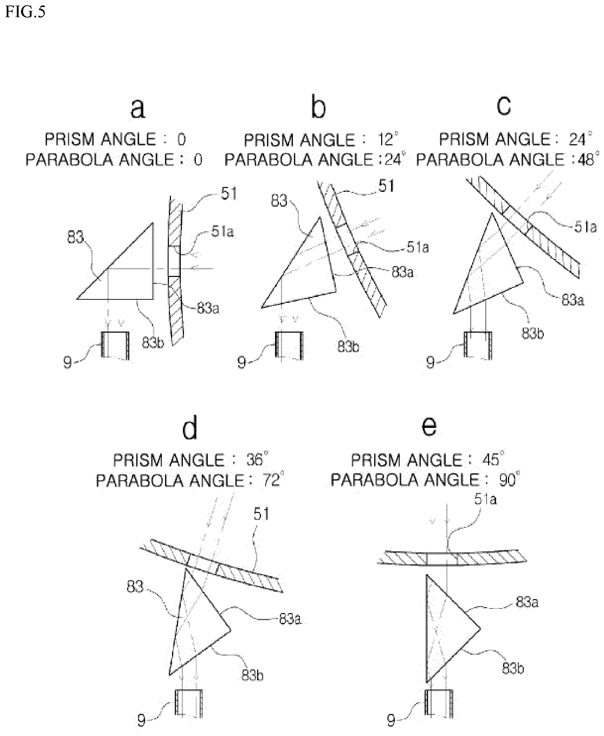

In the embodiment of the present invention, in a case where the concentrator-type parabola system 5 and the light guidance means 8 are included, even if the angle at which the high-density light is introduced is changed as shown in (a) to (e) of Fig. 5, it is possible to always guide the high-density light in the same direction.

That is, as shown in (a) of Fig. 5, when the rectangular prism is disposed at sunrise in parallel with the light transport hole 51a formed in the first parabola 51 of the concentrator-type parabola system 5, a light incident surface 83a and a light emitting surface 83b of the total-reflection rectangular prism 83 constituting the light guidance means 8 are disposed perpendicular to each other, so that the high-density light is guided downward. As shown in (b) of Fig. 5, when the rectangular prism is rotated at an angle of 24 degrees from being in parallel with the light transport hole 51a formed in the first parabola 51, the light incident surface 83a and the light emitting surface 83b of the total-reflection rectangular prism 83 constituting the light guidance means 8 are rotated at an angle of 12 degrees, so that the high-density light is guided downward through the light emitting surface 83b.

Also, as shown in (c), (d), and (e) of Fig. 5, when the rectangular prism is rotated gradually at angles of 48, 72, and 90 degrees from being in parallel with the light transport hole 51a formed in the first parabola 51, the light incident surface 83a and the light emitting surface 83b of the total-reflection rectangular prism 83 constituting the light guidance means 8 are rotated at angles of 24, 36, and 45 degrees, in other words, half as much as the rotation angle of the rectangular prism, so that the high-density light is guided. The high-density light is guided and provided in one direction, i.e., downward at all times regardless of the movement of the concentrator-type parabola system 5 along the altitude of the sun.

Meanwhile, in the embodiment of the present invention, after the high-density light is guided by the light guidance means 8, the high-density light is provided to a third area.

For this purpose, in the embodiment present invention, a safety pipe 9 is built under the total-reflection rectangular prism 83 constituting the light guidance means 8 and at the center of the rotational support plate 31 on which the support 4 is built. A guiding total-reflection rectangular prism 10 which guides and provides the high-density light to the third area is further installed at a position aligned with the center of the safety pipe 9, in the base frame 2 under the rotational support plate 31.

An undescribed reference numeral 100 in the drawings represents a heat storage device which stores the high-density light provided by a plurality of solar tracking concentrators 1 of the present invention.

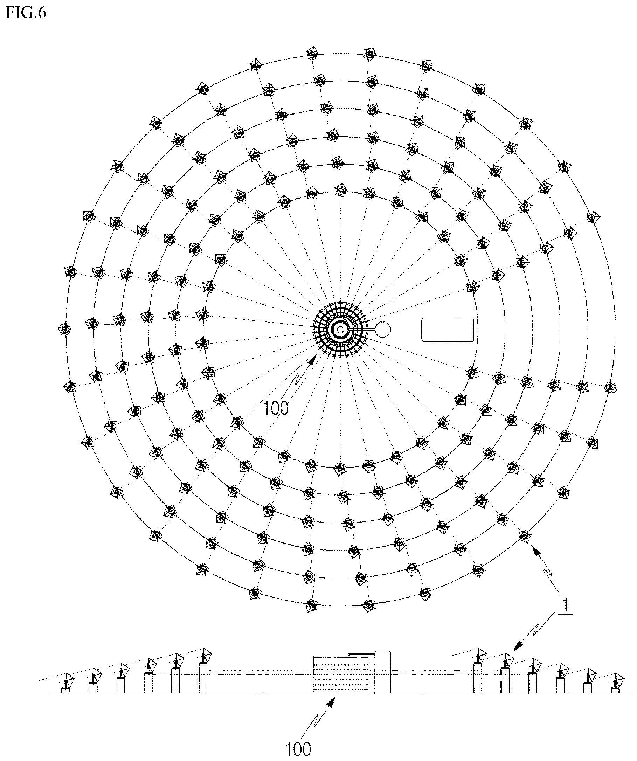

As shown in Fig. 6, the plurality of solar tracking concentrators 1 having such a configuration of the present invention are disposed and provide the high-density light to the heat storage device 100, and thus can be applied to a home solar heat boiler or commercial solar heat boiler. Hereafter, the operation of the embodiment of the present invention will be described.

The solar tracking concentrator 1 provided by the present invention is controlled by an unshown control means. The solar tracking concentrator 1 can concentrate the sunlight while tracking the sun from sunrise to sunset.

That is, according to the embodiment of the present invention, the east-west tracking motor 35 of the east-west tracking means 3 and the altitude tracking motor 61 of the altitude tracking means 6 are driven at the same time simultaneously with the sunrise, so that the first parabola 51 of the concentrator-type parabola system 5 tracks the sun.

The high-density light concentrated by the first parabola 51 during the track of the sun as mentioned above is concentrated again by the second parabola 53 located behind the focal point of the first parabola 51, and then is provided to the light transport hole 51a formed in the center of the first parabola 51.

Since the high-density light provided to the light transport hole 51a is rotated only half as much as the rotation angle of the first parabola 51 which is moved angularly by the altitude tracking means 6, the high-density light is guided only in one direction as shown in (a) to (e) of Fig. 5 irrespective of the movement of the concentrator-type parabola system 5. The high-density light guided by the light guidance means 8 is provided to the third area by the guiding total-reflection rectangular prism 10 fixed and installed to the base frame 2.

While the specific embodiment of the present invention has been described in detail, various modifications and changes of the embodiment can be made without departing from the spirit and scope of the present invention. Therefore, the scope of the present invention should not be limited to the foregoing embodiment and should be defined by the following claims and equivalents thereto.

### INDUSTRIAL APPLICABILITY

The solar tracking concentrator provided by the present invention can be applied to a heat source of the home solar heat boiler, industrial solar heat boiler, and heat storage device for power generation, etc.

## Claims

1. A solar tracking concentrator (1) comprising:
an east-west tracking means (3) for tracking the movement of the sun in the east-west direction from the upper part of a base frame (2);
a support (4) disposed vertically on the east-west tracking means (3);
a concentrator-type parabola system (5) disposed so that a shaft thereof is supported by the support (4), and having a second parabola (53) disposed behind the focal point of a first parabola (51) having a wide area so that high-density light is concentrated in the center of the first parabola (51); and
an altitude tracking means (6) disposed on the support (4) so as to have the concentrator-type parabola system (5) tracking the solar altitude,
**characterized in that** the solar tracking concentrator further comprises:
a prism case (82) which is disposed so as to cause a shaft thereof to be supported by the support (4) such that the prism case is positioned in the rear of a light transport hole (51a) formed in the center of the first parabola (51) of the concentrator-type parabola system (5), and so as to move angularly by means of the driving power of an altitude tracking motor (61) of the altitude tracking means (6); and
a light guidance means (8) composed of a total-reflection rectangular prism (83) coupled to the prism case (82),
wherein the light guidance means (8) rotates half as much as the rotational angle of the altitude tracking means, thereby allowing the high-density light to be always guided and provided to the same location, and
wherein the rectangular portion of the total-reflection rectangular prism (83) is disposed toward the concentrator-type parabola system (5).

2. The solar tracking concentrator of claim 1, wherein a high-density light transmitting safety pipe (9) which guides the high-density provided from the total-reflection rectangular prism (83) of the light guidance means (8) is built on a rotational support plate (31) constituting the east-west tracking means (3), and wherein a guiding total-reflection rectangular prism (10) which guides and provides the high-density light to a third area is further installed in the base frame (2) under the high-density light transmitting safety pipe (9).

## Patentansprüche

1. Ein sonnenverfolgender Konzentrator (1) umfassend:
eine Ost-West-Nachführungseinrichtung (3) zum Verfolgen der Bewegung der Sonne in der Ost-West-Richtung von dem oberen Teil eines Grundgestells (2);
einen Träger (4), der vertikal auf der Ost-West-Nachführungseinrichtung (3) angeordnet ist;
ein konzentratorartiges Parabolsystem (5), derart angeordnet, dass ein Schaft davon durch den Träger (4) gehalten wird, und aufweisend ein zweites Parabelelement (53), angeordnet hinter dem Fokalpunkt eines ersten Parabelelements (51), das eine weite Fläche aufweist, so dass Licht hoher Dichte in der Mitte des ersten Parabelelements (51) konzentriert wird; und
eine Sonnenhöhe-nachführungseinheit (6), die auf dem Träger (4) angeordnet ist, so dass das konzentratorartige Parabolsystem (5) die Sonnenhöhe folgt,
**dadurch gekennzeichnet, dass**
der sonnenverfolgende Konzentrator des Weiteren umfasst:
ein Prismengehäuse (82), welches derart angeordnet ist, dass ein Schaft davon durch den Träger (4) gehalten wird, so dass das Prismengehäuse hinter einer Lichtdurchgangsöffnung (51a), die in der Mitte des ersten Parabelelements (51) des konzentratorartigen Parabolsystems (5) ausgebildet ist, positioniert wird, und so, dass es durch die Antriebskraft eines Sonnenhöhe-nachführungsmotors (61) der Sonnenhöhe-nachführungseinrichtung (6) im Winkel bewegt wird; und
ein Lichtführungsmittel (8), gebildet aus einem rechteckförmigen Totalreflektionsprisma (83), das an das Prismengehäuse (82) gekoppelt ist, wobei sich das Lichtführungsmittel (8) halb soviel dreht wie der Rotationswinkel der Sonnenhöhe-nachführungseinrichtung, dadurch ermöglichend dem Licht hoher Dichte immer auf die gleiche Stelle geführt und bereitgestellt zu werden, und
wobei der rechteckförmige Teil des rechteckförmigen Totalreflektionsprismas (83) zu dem konzentratorartigen Parabolsystem (5) hin angeordnet ist.

2. Der sonnenverfolgende Konzentrator des Anspruchs 1, wobei eine Sicherheitsröhre (9) zum Übertragen von Licht hoher Dichte, welche das Licht hoher Dichte, das von dem rechteckförmigen Totalreflektionsprisma (83) des Lichtführungsmittels (8) bereitgestellt wird, führt, auf einer drehbaren Trägerplatte (31), die die Ost-West-Folgeeinrichtung (3) bildet, aufgebaut ist, und wobei ein führendes rechteckförmiges Totalreflektionsprisma (10), welches das Licht hoher Dichte zu einem dritten Bereich führt und bereitstellt, des Weiteren in dem Basisgestell (2) unter der Sicherheitsröhre (9) zum Übertragen des Lichts hoher Dichte installiert ist.

## Revendications

1. Concentrateur de suivi solaire (1) comprenant :
un moyen de suivi d'est en ouest (3) pour suivre le mouvement du soleil dans la direction d'est en ouest depuis la partie supérieure d'un cadre de base (2) ;
un support (4) disposé à la verticale sur le moyen de suivi d'est en ouest (3) ;
un système de parabole de type concentrateur (5) disposé de sorte qu'un arbre de celui-ci soit supporté par le support (4), et ayant une seconde parabole (53) disposée derrière le point focal d'une première parabole (51) ayant une aire large de sorte qu'une lumière à haute densité soit concentrée au centre de la première parabole (51) ; et
un moyen de suivi d'altitude (6) disposé sur le support (4) de façon à amener le système de parabole de type concentrateur (5) à suivre l'altitude solaire,
**caractérisé en ce que** le concentrateur de suivi solaire comprend en outre :
un boîtier à prisme (82) qui est disposé de façon à amener un arbre de celui-ci à être supporté par le support (4) de sorte que le boîtier à prisme soit positionné à l'arrière d'un trou de transport de lumière (51a) formé au centre de la première parabole (51) du système de parabole de type concentrateur (5), et de façon à se déplacer angulairement au moyen de la puissance motrice d'un moteur de suivi d'altitude (61) du moyen de suivi d'altitude (6) ; et
un moyen de guidage de lumière (8) composé d'un prisme rectangulaire de réflexion totale (83) couplé au boîtier à prisme (82),
dans lequel le moyen de guidage de lumière (8) tourne moitié moins que l'angle de rotation du moyen de suivi d'altitude, permettant ainsi de toujours guider et fournir la lumière haute intensité vers le même emplacement, et
dans lequel la portion rectangulaire du prisme rectangulaire de réflexion totale (83) est disposée vers le système de parabole de type concentrateur (5).

2. Concentrateur de suivi solaire selon la revendication 1, dans lequel un tuyau de sécurité de transmission de lumière à haute densité (9) qui guide la lumière à haute densité fournie depuis le prisme rectangulaire de réflexion totale (83) du moyen de guidage de lumière (8) est construit sur une plaque de support rotative (31) constituant le moyen de suivi d'est en ouest (3), et dans lequel un prisme rectangulaire de réflexion totale de guidage (10) qui guide et fournit la lumière à haute densité à une troisième aire est en outre installé dans le cadre de base (2) sous le tuyau de sécurité de transmission de lumière à haute densité (9).
